# EUROPÄISCHE PATENTSCHRIFT

(11) **EP 2 474 445 B1**
(45) Veröffentlichungstag und Bekanntmachung des Hinweises auf die Patenterteilung: **06.04.2016**
(21) Anmeldenummer: 12000025.2
(22) Anmeldetag: 03.01.2012
(51) Int. Cl.: B60P 7/08

(54) **Verzurröse**
Lashing hook
Oeillet d'arrimage

(30) Priorität: 07.01.2011 DE 202011001237 U
(43) Veröffentlichungstag der Anmeldung: 11.07.2012
(73) Patentinhaber: Gebr. Kemmerich GmbH, 57439 Attendorn (DE)
(72) Erfinder: Niklas, Jörg, 57413 Finnentrop (DE); Bongen, Oliver, 57413 Finnentrop (DE)
(74) Vertreter: Köchling, Conrad-Joachim

(56) Entgegenhaltungen:
- WO-A1-01/72548
- DE-A1- 10 130 202
- DE-A1-102005 026 964
- US-A- 5 774 948

## Beschreibung

Die Erfindung betrifft eine Verzurröse für den Laderaum eines Kraftfahrzeuges, zumindest bestehend aus einem Halter mit einem im Halter aus einer Nichtgebrauchslage in eine Gebrauchslage verschwenkbaren etwa ringförmigen Bügel, wobei der Halter einen den Bügel umfänglich umgreifenden Bereich aufweist und Halter und Bügel vorzugsweise innerhalb eines Rahmenteils im Boden des Laderaums angeordnet und befestigt sind, wobei der Bügel zum Verzurren von Spanngurten, Halteseilen, Haltenetzen oder dergleichen Ladesicherungselementen auf oder an der Ladefläche dient, wie z.B. in DE 10130202 A1 gezeigt.

Derartige Verzurrösen sind im Stand der Technik vielfach bekannt. Sie dienen dazu, im Laderaum des Kraftfahrzeuges mitgeführte Gegenstände wie beispielsweise Gepäck transportsicher zu befestigen. Zur Benutzung einer derartigen Verzurröse wird der sich in der Nichtgebrauchslage etwa parallel zum Ladeboden erstreckende Bügel verschwenkt, beispielsweise in eine etwa senkrechte Gebrauchslage. Nun kann durch den ösenartigen Bügel ein Spannseil, Spanngurt oder ähnliches Spannmittel hindurchgeführt werden und Gepäck oder andere Gegenstände damit an dem Bügel verzurrt werden.

Derartige Lösungen haben sich an sich bewährt, jedoch ist es dabei nachteilig, dass häufig durch zu hohe Krafteinwirkung beim Verzurren des Gepäcks oder bei der Handhabung des Bügels ein Überdrehen des Bügels über die Gebrauchslage hinaus erfolgen kann. Dabei kann der Bügel das Rahmenteil und gegebenenfalls Teile der Laderaumverkleidung des Kräftfahrzeuges beschädigen.

Aufgrund des eingangs genannten Standes der Technik liegt der vorliegenden Erfindung die Aufgabe zugrunde, eine Verzurröse der eingangs genannten Art zu schaffen, bei der ein Überdrehen des Bügels über die Gebrauchslage hinaus und eine dadurch bedingte Beschädigung an Teilen der Verzurröse oder der Laderaumverkleidung wirksam verhindert ist, der dabei kostengünstig und einfach herzustellen ist und eine lange Lebensdauer aufweist.

Zur Lösung dieser Aufgabe schlägt die Erfindung vor, dass der Halter in seinem den Bügel umfänglich umgreifenden Bereich eine Ausnehmung aufweist, innerhalb derer ein an dem Bügel radial abragender Vorsprung angeordnet oder ausgebildet ist, wobei der Vorsprung in der Gebrauchslage an einer Innenrandkante der Ausnehmung anliegt. Bei einer derartigen erfindungsgemäßen Lösung kann der Bügel innerhalb des Halters in an sich bekannter Art und Weise verschwenkt werden. Bei Erreichen der aufgeschwenkten Gebrauchslage liegt der beziehungsweise liegen die am Bügel angeordneten Vorsprünge derart an einer Innenrandkante der Ausnehmung an, dass ein weiteres Verschwenken über die Gebrauchslage hinaus verhindert ist. Somit kann ein derartiger erfindungsgemäßer Bügel nicht über die Gebrauchslage hinaus verschwenkt werden und selbst Schaden nehmen und/oder weitere Teile der Verzurröse wie das Rahmenteil oder Teile der Laderaumverkleidung beschädigen.

Die Ringform des Bügels ist zumindest im vom Halter umgriffenen Bereich gerade ausgebildet, in einer Ausführungsform weist der ringförmige Bügel auch eine zweite, geringfügig kürzer ausgebildete Gerade in einem dem umgriffenen Bereich gegenüberliegenden Bereich auf. Ein derartig geformter Bügel kann auf schnelle und einfache Art und Weise beispielsweise durch Hineingreifen mit dem Finger aus der etwa waagerechten Nichtgebrauchslage in eine etwa senkrechte Gebrauchslage verschwenkt werden, und anschließend in der etwa senkrechten Gebrauchslage ein entsprechendes Spannmittel wie beispielsweise ein Spanngurt, ein Halteseil oder ein Haitenetz an dem Bügel befestigt und gegebenenfalls gespannt werden.

Dabei kann besonders bevorzugt vorgesehen sein, dass der Bügel aus einem zu einer Ringform gebogenen Drahtabschnitt besteht, dessen Stoßstelle im Bereich der Ausnehmung angeordnet ist, wobei der Vorsprung an einem der Enden des Drahtabschnitts an oder nahe an der Stoßstelle innerhalb der Ausnehmung angeordnet ist.

Insbesondere kann besonders bevorzugt vorgesehen sein, dass der Bügel aus einem zu einer Ringform gebogenen Drahtabschnitt besteht, dessen Stoßstelle im Bereich der Ausnehmung angeordnet ist, wobei an jedem Ende des Drahtabschnitts an oder nahe an der Stoßstelle innerhalb der Ausnehmung ein Vorsprung angeordnet ist.

Die Anordnung des Vorsprungs beziehungsweise der Vorsprünge an oder nahe der Stoßstelle ermöglicht eine besonders hohe Kraftaufnahme des Bügels beim Verzurren eines Spanngurtes, Halteseiles oder dergleichen, ohne dabei die Enden des Bügels aufzubiegen.

Weiter kann insbesondere besonders bevorzugt vorgesehen sein, dass die Breite der Ausnehmung geringfügig größer ist als die Breite des oder der Vorsprünge.

Hierdurch ist ein Auseinanderbiegen auch nicht aneinander befestigter Endbereiche des Bügels auch bei axial zum umgriffenen Bereich angreifenden Kräften sichergestellt, da bei derartigen Kräften die Vorsprünge an den die Breite der Ausnehmung begrenzenden Seitenrandkanten der Ausnehmung anliegen beziehungsweise anstoßen und ein weiteres Aufbiegen in axial zum umgriffenen Bereich verlaufender Richtung somit verhindert ist.

Hierdurch kann auf ein kostenintensives Verbinden der freien Enden des Drahtabschnitts, wie es üblicherweise mittels Verschweißen erfolgt, verzichtet werden, so dass eine derartige erfindungsgemäße Verzurröse einerseits besonders kostengünstig herstellbar ist, und andererseits hohe Zugkräfte aufnehmen kann.

Darüber hinaus kann besonders bevorzugt vorgesehen sein, dass das Rahmenteil den Halter unterseitig und außenseitig derart umgreift, dass der Halter und das Rahmenteil in der Nichtgebrauchslage eine Ebene bilden, wobei der Halter und das Rahmenteil mit dem Ladeboden verbunden sind, beispielsweise mittels Verschrauben, und der Halter in der Zusammenbaulage mit einer Zierkappe abgedeckt ist.

Mittels eines derartigen Rahmenteils kann die gesamte Verzurröse in den Ladeboden des Kraftfahrzeuges eingelassen werden und bündig mit diesem abschließen. Hierdurch ist es ermöglicht, auch größere Gepäckstücke beispielsweise über die Verzurröse hinwegzuschieben oder darauf abzustellen, ohne dass die Verzurröse einen Widerstand bildet.

Zudem kann besonders bevorzugt vorgesehen sein, dass am Halter Verdrehsicherungselemente in Form von am Bügel gegenüberliegenden Bereich angeordneten Haltevorsprüngen ausgebildet sind, die in entsprechende Ausnehmungen am Ladeboden eingreifen.

Hierdurch ist die gesamte Verzurröse gegen ein Verdrehen gegenüber dem Befestigungsbereich, insbesondere dem Laderaumboden, gesichert. Durch die Haltevorsprünge ist es ermöglicht, die Verzurröse mittels einer einzigen Schraube oder einem ähnlichen Befestigungsmittel wie beispielsweise einem Niet an dem Laderaumboden zu befestigen, da die Haltevorsprünge die Verzurröse gegen ein Verdrehen sichern.

Auch kann besonders bevorzugt vorgesehen sein, dass am Halter innerhalb des den Bügel umfänglich umgreifenden Bereiches ein elastisches Mittel angeordnet ist.

Schließlich kann besonders bevorzugt vorgesehen sein, dass das elastische Mittel durch einen Kunststoffschlauchabschnitt gebildet ist, dessen Länge der Länge des umgriffenen Bereichs entspricht und der parallel zum Bügel verlaufend vom Halter umgriffen ist.

Die Anordnung eines derartigen Kunststoffschlauch-abschnittes als elastisches Mittel dient zum einen der Geräuschdämmung und zum anderen als Toleranzausgleich des Bügels innerhalb des den Bügel umgreifenden Bereiches des Halters. Hierdurch ist eine nahezu geräuschlose Betätigung des Bügels innerhalb des Halters ermöglicht und beispielsweise Klappergeräusche verhindert.
Ein Ausführungsbeispiel der Erfindung ist in den Zeichnungen dargestellt und im Folgenden näher beschrieben. Es zeigt:
- Figur 1: eine erfindungsgemäße Verzurröse In Explosionsdarstellung;
- Figur 2: den Bügel aus Figur 1 in Vergrößerter Darstellung;
- Figur 3: einen erfindungsgemäßen Halter mit Bügel in Gebrauchslage geschnitten;
- Figur 4: desgleichen aus Figur 3 in Nichtgebrauchslage;

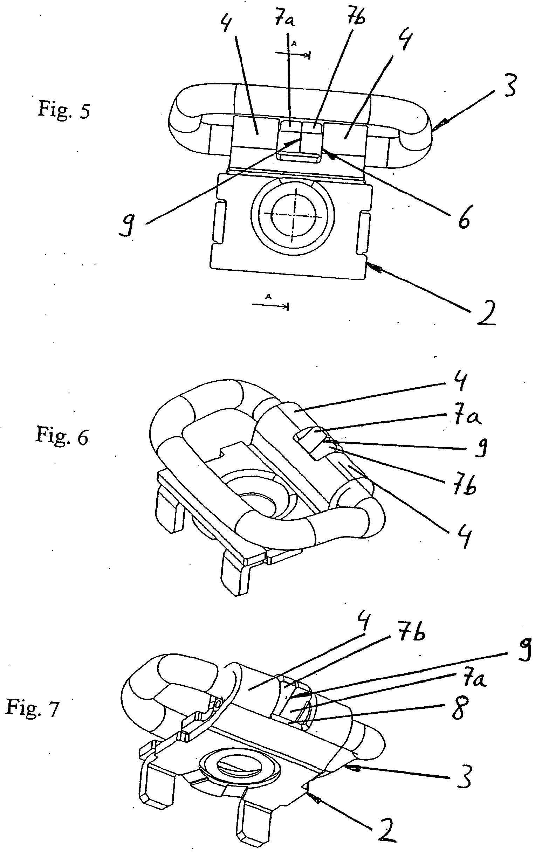

- Figur 5: einen erfindungsgemäßen Halter mit Bügel in der Gebrauchslage in Draufsicht;
- Figur 6: desgleichen aus Figur 5 in Nichtgebrauchslage von schräg Oben gesehen;
- Figur 7: desgleichen aus Figur 6 von schräg unten gesehen.

In den Figuren ist eine Verzurröse 1 für den Laderaum eines Kraftfahrzeuges gezeigt. Diese besteht im Ausführungsbeispiel aus einem Halter 2 aus Stahlblech mit einem im Halter 2 aus einer Nichtgebrauchslage in einer Gebrauchslage verschwenkbaren ringförmigen Bügel 3 ebenfalls aus Stahl. Der Halter 2 weist einen den Bügel 3 umfänglich umgreifenden Bereich 4 auf. In der Montagesolllage sind der Halter 2 und der Bügel 3 innerhalb eines Rahmenteils 5 im Boden des Laderaums eines Kraftfahrzeugs angeordnet und befestigt. Der Bügel 3 dient zum Verzurren von Spanngurten, Halteseilen, Haltenetzen oder dergleichen Ladesicherungselementen auf oder an der Ladefläche des Laderaums des Kraftfahrzeugs.

Erfindungsgemäß weist der Halter 2 in seinem dem Bügel 3 umfänglich umgreifenden Bereich 4 eine Ausnehmung 6 auf. Innerhalb der Ausnehmung 6 ist ein radial vom Bügel 3 abragender Vorsprung 7a, 7b angeordnet. Alternativ und wie in den Figuren gezeigt, können auch zwei benachbarte Vorsprünge 7a, 7b angeordnet sein. Jeder Vorsprung 7a, 7b liegt dabei in der Gebrauchslage an einer Innenrandkante 8 der Ausnehmung 6 an, um ein Verschwenken des Bügels 3 über die Gebrauchslage hinaus und ein dadurch bedingtes Beschädigen des Rahmenteils 5 oder Teile der Ladebodenverkleidung zu verhindern.

Der Bügel 3 besteht dabei aus einem zu einer Ringform gebogenem Drahtabschnitt mit einer im Bereich der Ausnehmung 6 angeordneten Stoßstelle 9. Dabei ist an jedem Ende des Drahtabschnitts an beziehungsweise nahe der Stoßstelle 9 jeweils ein Vorsprung 7a beziehungsweise 7b innerhalb der Ausnehmung 6 angeordnet. Die Vorsprünge 7a, 7b verschwenken mit dem Bügel 3 beim Verschwenken des Bügels 3 aus der Nichtgebrauchslage in die Gebrauchslage. Nach Erreichen der Gebrauchslage liegen die Vorsprünge 7a, 7b an der Innenrandkante 8 der Ausnehmung 6 an, die somit eine Wegbegrenzung für den verschwenkbaren Bügel 3 bildet und ein Verschwenken des Bügels 3 über die Gebrauchslage hinaus verhindert.

Alternativ und in den Figuren nicht gezeigt, kann auch nur an oder nahe der Stoßstelle an einem Ende des Drahtabschnitts ein Vorsprung 7a oder 7b angeordnet sein.

Die Ringform des Bügels 3 weist einen ersten geraden Bereich auf, der vom Halter 2 umgriffen ist (bei 4). Zudem weist der Halter 3 einen zweiten, etwa zum ersten geraden Bereich parallelen Bereich auf.

Die Länge der Ausnehmung 6 ist in Axialrichtung der ersten Geraden gesehen, geringfügig größer als die Länge der Vorsprünge 7a, 7b. Hierdurch ist ein beispielsweise stoffschlüssiges Verbinden der beiden Enden, welches mit zusätzlichen Kosten verbunden ist, nicht mehr nötig, da die Vorsprünge bei axial zur ersten Geraden auftretenden auf den Bügel 3 einwirkenden Kräften innerhalb der Ausnehmung angeordnet sind und ein Aufbiegen der Enden des Drahtbügels verhindern, da sie an den die Länge der Ausnehmung 6 begrenzenden Seitenrandkanten der Ausnehmung 6 anliegen beziehungsweise anstoßen.

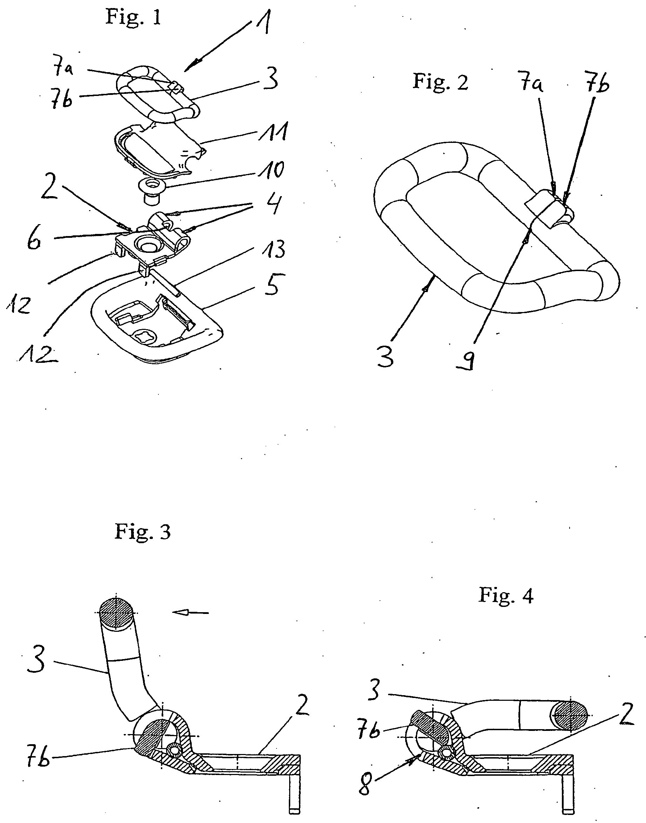

Wie insbesondere aus Figur 1 ersichtlich, ist ein Rahmenteil 5 vorgesehen, welches den Halter 2 unterseitig und außenseitig derart umgreift, dass der Halter 2 und das Rahmenteil in der Nichtgebrauchslage eine Ebene bilden. Dabei sind der Halter 2 und das Rahmenteil 5 mit dem Ladeboden verbunden. Im Ausführungsbeispiel sind der Halter 2 und das Rahmenteil 5 mit dem Ladeboden verschraubt (bei 10). Zur optischen Abdeckung dieser Verschraubung 10 ist in der Zusammenbaulage der Verzurröse 1 eine Zierkappe 11 den Halter 2 und die Schraube 10 verdeckend innerhalb der Verzurröse 1 vorgesehen. Der Halter 2 besteht dabei aus einer Platte und einem längsseitig von der Platte abragenden Bereich, der den Bügel 3 umgreift.

Als Toleranzausgleich und um eine mögliche Geräuschentwicklung, wie beispielsweise Klappern zu verhindern, ist an dem Halter 2 innerhalb des den Bügel 3 umfänglich umgreifenden Bereiches 4 ein elastisches Mittel in Form eines Kunststoffschlauchabschnittes 13 angeordnet. Im Ausführungsbeispiel entspricht die Länge des Kunststoffschlauchabschnittes 13 der Länge des umgriffenen Bereiches 4 des Bügels 3 und ist gemeinsam mit dem Bügel 3 vom Halter umgriffen.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Verzurröse (1) für den Laderaum eines Kraftfahrzeuges, zumindest bestehend aus einem Halter (2) mit einem im Halter (2) aus einer Nichtgebrauchslage in eine Gebrauchslage verschwenkbaren etwa ringförmigen Bügel (3), wobei der Halter (2) einen den Bügel (3) umfänglich umgreifenden Bereich (4) aufweist und Halter (2) und Bügel (3) vorzugsweise innerhalb eines Rahmenteils (5) im Boden des Laderaums angeordnet und befestigt sind, wobei der Bügel (3) zum Verzurren von Spanngurten, Halteseilen, Haltenetzen oder dergleichen Ladesicherungselementen auf oder an der Ladefläche dient, wobei der Halter (2) in seinem den Bügel (3) umfänglich umgreifenden Bereich (4) eine Ausnehmung (6) aufweist, **dadurch gekennzeichnet, dass** innerhalb derer ein an dem Bügel (3) radial abragender Vorsprung (7a,7b) angeordnet oder ausgebildet ist, wobei der Vorsprung (7a,7b) in der Gebrauchslage an einer Innenrandkante (8) der Ausnehmung (6) anliegt.

2. Verzurröse (1) nach Anspruch 1, **dadurch gekennzeichnet, dass** der Bügel (3) aus einem zu einer Ringform gebogenen Drahtabschnitt besteht, dessen Stoßstelle (9) im Bereich der Ausnehmung (6) angeordnet ist, wobei der Vorsprung (7a oder 7b) an einem der Enden des Drahtabschnitts an oder nahe an der Stoßstelle (9) innerhalb der Ausnehmung (6) angeordnet ist.

3. Verzurröse (1) nach Anspruch 1, **dadurch gekennzeichnet, dass** der Bügel (3) aus einem zu einer Ringform gebogenen Drahtabschnitt besteht, dessen Stoßstelle (9) im Bereich der Ausnehmung (6) angeordnet ist, wobei an jedem Ende des Drahtabschnitts an oder nahe an der Stoßstelle (9) innerhalb der Ausnehmung (6) ein Vorsprung (7a oder 7b) angeordnet ist.

4. Verzurröse (1) nach einem der Ansprüche 1 bis 3, **dadurch gekennzeichnet, dass** die Breite der Ausnehmung (6) geringfügig größer ist als die Breite des oder der Vorsprünge (7a, 7b).

5. Verzurröse (1) nach einem der Ansprüche 1 bis 4, **dadurch gekennzeichnet, dass** das Rahmenteil (5) den Halter (2) unterseitig und außenseitig derart umgreift, dass der Halter (2) und das Rahmenteil (5) in der Nichtgebrauchslage eine Ebene bilden, wobei der Halter (2) und das Rahmenteil (5) mit dem Ladeboden verbunden sind, beispielsweise mittels Verschrauben (bei 10), und der Halter (2) in der Zusammenbaulage mit einer Zierkappe (11) abgedeckt ist.

6. Verzurröse (1) nach einem der Ansprüche 1 bis 5, **dadurch gekennzeichnet, dass** am Halter (2) Verdrehsicherungselemente in Form von am Bügel (3) gegenüberliegenden Bereich angeordneten Haltevorsprüngen (12) ausgebildet sind, die in entsprechende Ausnehmungen am Ladeboden eingreifen.

7. Verzurröse (1) nach einem der Ansprüche 1 bis 6, **dadurch gekennzeichnet, dass** am Halter (2) innerhalb des den Bügel (3) umfänglich umgreifenden Bereiches (4) ein elastisches Mittel angeordnet ist.

8. Verzurröse (1) nach Anspruch 7, **dadurch gekennzeichnet, dass** das elastische Mittel durch einen Kunststoffschlauchabschnitt (13) gebildet ist, dessen Länge der Länge des umgriffenen Bereichs (4) entspricht und der parallel zum Bügel (3) verlaufend vom Halter (2) umgriffen ist.

## Claims

1. A lashing hook (1) for the loading space of a motor vehicle, at least comprising a holder (2) with an approximately annular bracket (3) pivoting in the holder (2) from a non-use position into a use position, the holder (2) having an area (4) encompassing the bracket (3) in a peripheral manner, and holder (2) and bracket (3) preferably being arranged and fixed within a frame part (5) in the base of the loading space, the bracket (3) being used for lashing restraint straps, holding ropes, holding nets or the like load securing elements on or at the loading platform, the holder (2) having in its area (4) encompassing the bracket (3) in a peripheral manner a recess (6), **characterized by** that within the latter a projection (7a, 7b) radially projecting from the bracket (3) is arranged, the projection (7a, 7b) resting, in the use position, against an inner edge (8) of the recess (6).

2. The lashing hook (1) according to claim 1, **characterized by** that the bracket (3) consists of a wire section bent into an annular shape, the joint (9) of which is arranged in the area of the recess (6), the projection (7a or 7b) being arranged at one of the ends of the wire section at or close to the joint (9) within the recess (6).

3. The lashing hook (1) according to claim 1, **characterized by** that the bracket (3) consists of a wire section bent into an annular shape, the joint (9) of which is arranged in the area of the recess (6), at each end of the wire section at or close to the joint (9) within the recess (6) a projection (7a or 7b) being arranged.

4. The lashing hook (1) according to one of claims 1 to 3, **characterized by** that the width of the recess (6) is slightly larger than the width of the projection(s) (7a, 7b).

5. The lashing hook (1) according to one of claims 1 to 4, **characterized by** that the frame part (5) encompasses the holder (2) at the bottom side and at the outside such that the holder (2) and the frame part (5), in the non-use position, form a plane, the holder (2) and the frame part (5) being connected to the loading base, for instance by means of screwing (at 10), and the holder (2), in the assembled position, being covered by with a decorative cap (11).

6. The lashing hook (1) according to one of claims 1 to 5, **characterized by** that at the holder (2) antirotation members in the form of holding projections (12) arranged at the area opposite to the bracket (3) are provided, said holding projections (12) engaging corresponding recesses at the loading base.

7. The lashing hook (1) according to one of claims 1 to 6, **characterized by** that at the holder (2) within the area (4) encompassing the bracket (3) in a peripheral manner, an elastic means is arranged.

8. The lashing hook (1) according to claim 7, **characterized by** that the elastic means is formed by a plastic hose section (13), the length of which corresponds to the length of the encompassed area (4) and which is encompassed in parallel to the bracket (3) by the holder (2).

## Revendications

1. Oeillet d'arrimage (1) pour la zone de chargement de véhicule automobile, au moins comprenant un support (2) avec un étrier (3) environ annulaire basculable dans le support (2) à partir d'une position de non-utilisation dans une position d'utilisation, le support (2) ayant une zone (4) périphériquement enveloppant l'étrier (3), et le support (2) et l'étrier (3) de préférence étant arrangés et fixés au-dedans d'une partie de structure (5) dans la base de la zone de chargement, l'étrier (3) étant utilisé pour arrimer de sangles de serrage, amarres de retenue, filet de retenue ou d'autres éléments de retenue de charge sur ou à la plate-forme de chargement, le support (2) ayant dans sa zone (4) périphériquement enveloppant l'étrier (3) un évidement (6), **caractérisé en ce qu'**au-dedans du dernier un bossage (7a, 7b) s'étendant radialement de l'étrier (3) est arrangé, le bossage (7a, 7b) faisant appui, dans la position d'utilisation, sur une côte intérieure (8) de l'évidement (6).

2. Oeillet d'arrimage (1) selon la revendication 1, **caractérisé en ce que** l'étrier (3) consiste en un tronçon de fil coudé en un anneau, la jonction (9) duquel est arrangée dans la zone de l'évidement (6), le bossage (7a ou 7b) étant arrangé à une des extrémités du tronçon de fil à ou près de la jonction (9) au-dedans de l'évidement (6).

3. Oeillet d'arrimage (1) selon la revendication 1, **caractérisé en ce que** l'étrier (3) consiste en un tronçon de fil coudé en un anneau, la jonction (9) duquel est arrangée dans la zone de l'évidement (6), à chaque extrémité du tronçon de fil à ou près de la jonction (9) au-dedans de l'évidement (6) un bossage (7a ou 7b) étant arrangé.

4. Oeillet d'arrimage (1) selon une des revendications 1 à 3, **caractérisé en ce que** la largeur de l'évidement (6) est légèrement plus grande que la largeur du (des) bossage(s) (7a, 7b).

5. Oeillet d'arrimage (1) selon une des revendications 1 à 4, **caractérisé en ce que** la partie de structure (5) enveloppe le support (2) à un côté de fond et à l'extérieur, de façon que le support (2) et la partie de structure (5), dans la position de non-utilisation, forment un plan, le support (2) et la partie de structure (5) étant liés à la base de chargement, par exemple au moyen de vissage (à 10), et le support (2), dans la position assemblée, étant recouvert d'un enjoliveur (11).

6. Oeillet d'arrimage (1) selon une des revendications 1 à 5, **caractérisé en ce qu'**au support (2) des éléments antirotation en forme de bossages de retenue (12) arrangés à la zone opposée à l'étrier (3) sont prévus, ces bossages de retenue (12) pénétrant des évidements correspondants à la base de chargement.

7. Oeillet d'arrimage (1) selon une des revendications 1 à 6, **caractérisé en ce qu'**au support (2) au-dedans de la zone (4) périphériquement enveloppant l'étrier (3), un moyen élastique est arrangé.

8. Oeillet d'arrimage (1) selon la revendication 7, **caractérisé en ce que** le moyen élastique est réalisé d'une partie de tuyau plastique (13), la longueur de laquelle correspond à la longueur de la zone (4) enveloppée et qui est enveloppée en parallèle à l'étrier (3) par le support (2).
